# EUROPÄISCHE PATENTSCHRIFT

(11) **EP 3 974 394 B1**
(45) Veröffentlichungstag und Bekanntmachung des Hinweises auf die Patenterteilung: **28.05.2025**
(21) Anmeldenummer: 21198295.4
(22) Anmeldetag: 22.09.2021
(51) Int. Cl.: C02F 1/52, C02F 1/56, C02F 1/68, C02F 101/10

(54) **MITTEL ZUM FÄLLEN VON SUSPENDIERTEN UND GELÖSTEN STOFFEN IN AUFZUBEREITENDEN; KOMMUNALEN ABWÄSSERN**
AGENT FOR PRECIPITATING SUSPENDED AND DISSOLVED SUBSTANCES IN MUNICIPAL WASTE WATER TO BE PROCESSED
MOYEN DE PRÉCIPITATION DES SUBSTANCES SUSPENDUES ET DISSOUTES DANS LES EAUX USÉES URBAINES À TRAITER

(30) Priorität: 28.09.2020 AT 508262020
(43) Veröffentlichungstag der Anmeldung: 30.03.2022
(73) Patentinhaber: Kubinger, Ulrich, 4675 Weibern (AT)
(72) Erfinder: Kubinger, Ulrich, 4675 Weibern (AT)
(74) Vertreter: Hübscher & Partner Patentanwälte GmbH

(56) Entgegenhaltungen:
- EP-A1- 2 808 306
- CN-A- 105 540 788
- CN-A- 105 565 452
- CN-A- 108 773 890

## Beschreibung

Die Erfindung bezieht sich auf Mittel zum Fällen von suspendierten und gelösten Stoffen in aufzubereitenden, kommunalen Abwässern mit einem Gemisch umfassend wenigstens ein Flockungsmittel zur Phosphatfällung, umfassend Fe(II)X und/oder Fe(III)X und/oder AIX und/oder polymere Verbindungen davon, wobei X entweder Cl und/oder ein Sulfat und/oder ein Nitrat ist, wenigstens ein organisches Polymer als Flockungshilfsmittel, umfassend kationifizierte Stärke und/oder Epichlorhydrindimethylamin-copolymer und/oder Polydiallyldimethylamoniumchlorid und/oder Polyamine und/oder Polyacrylamide und/oder eine Mischung dieser Stoffe und zur Beeinflussung der Ladungsverteilung und Bestimmung der Ladung des Flockungshilfsmittels wenigstens eine Erdalkali-Lösung, aufweisend Ca-Ionen und/oder Mg-Ionen.

Aus der EP2808306B1 ist ein Mittel zum Fällen von suspendierten Feststoffpartikeln in aufzubereitenden, kommunalen Abwässern bekannt. Das Mittel ist dabei ein Gemisch, welches unter anderem ein Flockungsmittel zur Phosphatfällung, wie beispielsweise Eisen- oder Aluminiumsalze, aufweist, das den im Abwasser gelösten Phosphatanteil in unlösliche Phosphate umwandelt. Um eine verbesserte Fest-Flüssig-Trennung der ausgefällten Stoffe zu erzielen, wird ein polymeres Flockungshilfsmittel eingesetzt, welches die Bildung von Makroflocken begünstigt und somit die Sedimentationsgeschwindigkeit der gefällten Stoffe erhöht. Die Ladung und somit Wirkung der Flockungshilfsmittel kann über Zugabe von Erdalkali-Lösungen geändert werden. Vor allem bei Abwässern mit hoher mikrobieller Belastung stellt sich jedoch das Problem, dass nach dem Einsatz des aus dem Stand der Technik bekannten Mittels ein signifikanter Rest von Mikroorganismen im Abwasser verbleibt, weswegen nach der Fällung weitere Maßnahmen, wie beispielsweise Chlor- Ozon- UV-Behandlungen etc., zur Aufbereitung des biologisch gereinigten Abwassers vorgenommen werden müssen.

Aus dem Stand der Technik ist die bakterizide Wirkung von Alkohol hinlänglich bekannt, wobei vor allem hochprozentige Alkohole im Bereich zwischen 50 - 80% eingesetzt werden. Der Alkohol kann aufgrund des vorhandenen Wasseranteils durch die Zellmembran des Mikroorganismus dringen, wo er die Proteine, unter anderem auch die Membranproteine, denaturiert. Dadurch kommt es zu einer Zerstörung der Zellstruktur. Alkohol hat zwar eine stark bakterizide Wirkung, jedoch ist dessen Einsatz aufgrund dessen geforderter hoher Konzentration auf Mittel zur Oberflächenreinigung beschränkt, da eine Zugabe von Alkohol in aufzubereitende Abwässer eine extreme Verdünnung des Alkohols und damit eine Wirkungslosigkeit bedeuten würde.

Die CN108773890A zeigt ein Mittel gemäß dem Oberbegriff, wobei das Mittel Ethanol aufweisen kann.

Der Erfindung liegt somit die Aufgabe zugrunde, ein Mittel der eingangs geschilderten Art vorzuschlagen, welches eine gezielte Bekämpfung von abwasserspezifischen Mikroorganismen, wie beispielsweise pathogene bzw. multiresistente Bakteriengruppen, ermöglicht, ohne dafür einen gesonderten Verfahrensschritt vorsehen zu müssen.

Die Erfindung löst die gestellte Aufgabe dadurch, dass das Gemisch 30 - 80 Gew% einer zwischen 10 und 30 Gew% Al₂O₃ umfassenden polymeren AIX-Lösung oder 30 - 80 Gew% einer AlCl₃-Lösung als Flockungsmittel, 5 - 30 Gew% einer 40 - 60%igen Epichlorhydrindimethylamin-copolymer-Lösung als Flockungshilfsmittel, 1 - 15 Gew% einer 20 - 40%igen MgCl₂-Lösung als Erdalkali-Lösung, sowie 5 - 30 Gew% einer 60 - 80%igen Ethanol-Lösung umfasst. Grundsätzlich umfasst das Mittel neben dem erfindungsgemäßen einwertigen Alkohol ein Flockungsmittel, welches gelöste Phosphate in ungelöste Phosphate umwandelt, ein organisches Polymer als Flockungshilfsmittel, welches eine Bildung von Makroflocken bestehend aus diversen ungelösten Stoffen, wie Zellresten, ungelösten Phosphaten etc., begünstigt und eine Erdalkalilösung, welche die Ladungsverteilung der Flockungshilfsmittel beeinflusst bzw. deren Ladung bestimmt. Es hat sich dabei herausgestellt, dass durch die Kombination des einwertigen Alkohols mit dem Flockungsmittel, dem Flockungshilfsmittel und der Erdalkali-Lösung bereits geringe Massenkonzentrationen eines einwertigen Alkohols, nämlich 5 - 30 Gew%, genügen, damit sich eine desinfizierende Wirkung einstellt. Überraschenderweise wird nämlich durch die Kombination aus Alkohol und den restlichen Komponenten ein stark verbesserter Ladungsausgleich sowohl zwischen den durch das Flockungsmittel gefällten, und dadurch ungelösten Stoffen und dem Flockungshilfsmittel, als auch zwischen den unerwünschten Mikroorganismen und dem Flockungshilfsmittel erreicht, wodurch eine Bildung von Makroflocken zwischen diesen Komponenten, welche im Rahmen einer Fest-Flüssig-Trennung sedimentieren, begünstigt wird. Darüber hinaus kann durch die von den Komponenten verursachte Ladungsänderung die Zellmembran der Mikroorganismen derart verändert werden, dass bereits die geringe Konzentration des einwertigen Alkohols ausreicht, um die Zerstörung bzw. den Abbau der Mikroorganismen zu begünstigen. Die bakterizide bzw. desinfizierende Wirkung des Alkohols wird demnach durch die Komponenten des Mittels im Gegensatz zu einer reinen Alkohollösung mit einer Konzentration von 5 - 30 Gew% synergetisch verstärkt, wie dies in den unten beschriebenen Vergleichsversuchen dargelegt ist. Zwar erhöht sich durch die Zugabe des Alkohols die Viskosität des Mittels, was sich aufgrund des somit erhöhten Strömungswiderstandes grundsätzlich nachteilig auf eine effiziente Fest-Flüssig-Trennung auswirkt, jedoch wird durch die Kombination des Alkohols mit der Erdalkali-Lösung das Flockungshilfsmittel dahingehend verbessert, dass sich besonders große Makroflocken bilden können. Die Größe der Makroflocken nimmt dabei stärker zu als die Viskosität, wodurch dennoch eine Erhöhung der Sedimentationsgeschwindigkeit und damit eine Verbesserung der Fest-Flüssig-Trennung erzielt werden kann. Hinzu kommt der Vorteil, dass durch die erhöhte Viskosität des Mittels ein Entweichen von etwaigen aus der aufgebrochenen Zellmembran der Bakterien austretenden Stoffen unterbunden werden kann, wodurch eine Stabilisierung und Bindung dieser Stoffe zu einer gemeinsamen Makroflocke begünstigt wird.

Versuchsreihen haben ergeben, dass Methanol, Ethanol, Propanol und/oder Butanol bzw. eine Mischung dieser einwertigen Alkohole die stärkste bakterizide Wirkung im Konzentrationsbereich 5 - 30 Gew% aufweisen.

Eine grundlegende Schwierigkeit bei der Desinfektion von Mikroorganismen in einem Abwasseraufbereitungsverfahren liegt in der gezielten Zerstörung bzw. Beseitigung nur bestimmter Mikroorganismen. Es sollen demnach keine Mikroorganismen, welche für die Nitrifikation und Denitrifikation sowie für die biologische Phosphorelimination relevant sind, zerstört bzw. beseitigt werden. Solche nützlichen Mikroorganismen können EPS (Extrazelluläre polymere Substanzen), einen gelartiger den Mikroorganismus umgebenden Biofilm, welcher Schmutz- bzw. Schadstoffpartikel bindet, zur Abwasserreinigung einsetzen. Durch die Ca-Ionen und/oder Mg-Ionen in der Erdalkali-Lösung wird die EPS stabilisiert und gegen eine Bindung durch das Flockungshilfsmittel geschützt, weswegen eine Makroflockenbildung und damit eine Abscheidung der nützlichen Mikroorganismen verhindert werden kann. Die besten Ergebnisse hierfür erzielt das Mittel, wenn es 30 - 80 Gew% einer zwischen 10 und 30 Gew% Al₂O₃ umfassenden polymeren AIX-Lösung als Flockungsmittel, 5 - 30 Gew% einer 40 - 60%igen Epichlorhydrindimethylamin-copolymer-Lösung als Flockungshilfsmittel, 1 - 15 Gew% einer 20 - 40%igen MgCl₂-Lösung als Erdalkali-Lösung, sowie 5 - 30 Gew% einer 60 - 80%igen Ethanol-Lösung umfasst. Als polymere AIX-Lösung kann eine Polyaluminiumchloridlösung vorgesehen sein.

Ähnlich gute Ergebnisse liefert ein Mittel, das 30 - 80 Gew% einer AlCl₃-Lösung als Flockungsmittel, 5 - 30 Gew% einer 40 - 60%igen Epichlorhydrindimethylamin-copolymer-Lösung als Flockungshilfsmittel, 1 - 15 Gew% einer 20 - 40%igen MgCl₂-Lösung als Erdalkali-Lösung, sowie 5 - 30 Gew% einer 60 - 80%igen Ethanol-Lösung umfasst.

Um ein Oberflächen-Volumen-Verhältnis der Makroflocken zu erzeugen, das einerseits trotz erhöhter Viskosität des Mittels zu einer schnellstmöglichen Sedimentation der Makroflocken und andererseits eine effektive Zerstörung unerwünschter Mikroorganismen, wie Fadenbakterien oder andere pathogene bzw. multiresistente Bakteriengruppen, ermöglicht, wird vorgeschlagen, dass das Mittel 30 - 80 Gew% einer 18 Gew% Al₂O₃ umfassenden Polyaluminiumchloridlösung als Flockungsmittel, 5 - 30 Gew% einer 50%igen Epichlorhydrindimethylamin-copolymer-Lösung als Flockungshilfsmittel, 1 - 15 Gew% einer 30%igen MgCl₂-Lösung als Erdalkali-Lösung, sowie 5 - 30 Gew% einer 70%igen Ethanol-Lösung umfasst.

### Ausführungsbeispiel:

Ein erfindungsgemäßes Mittel zum Fällen von suspendierten und gelösten Stoffen in aufzubereitenden, kommunalen Abwässern umfasst 60 Gew% einer 18 Gew% Al₂O₃ umfassenden Polyaluminiumchloridlösung als Flockungsmittel, 17 Gew% einer 50%igen Epichlorhydrindimethylamin-copolymer-Lösung als Flockungshilfsmittel, 6 Gew% einer 30%igen MgCl₂-Lösung als Erdalkali-Lösung, sowie 17 Gew% einer 70%igen Ethanol-Lösung.

Um die Wirksamkeit des Ausführungsbeispiels zu untersuchen, wurde das Sedimentationsverhalten einer mit dem Mittel versetzten Abwassersuspension und die vom Mittel verursachte Keimreduktion untersucht und mit Vergleichsproben verglichen.

### Sedimentationsverhalten mittels Absetzversuch

Zur Ermittlung des Sedimentationsverhaltens wurde ein standardisierter aus dem Stand der Technik bekannter Absetzversuch in einem 1000mL Messzylinder durchgeführt. Dabei wurden die Proben, mit Ausnahme einer unbehandelten Abwasserprobe 1, mit 50 ppm eines entsprechenden und im Folgenden näher beschriebenen Zusatzes versetzt.

Der Versuch wurde mit einer unbehandelten Abwasserprobe 1, mit einer mit einem Mittel gemäß dem Ausführungsbeispiel versetzten Abwasserprobe 2, mit einer mit einem nicht erfindungsgemäßen Mittel gemäß dem Ausführungsbeispiel versetzten Abwasserprobe 3, wobei die Ethanol-Lösung durch Wasser ersetzt wurde, mit einer mit 12%igen EtOH versetzten Abwasserprobe 4 und mit einer mit einem erfindungsgemäßen Mittel gemäß dem Ausführungsbeispiel versetzten Abwasserprobe 5, wobei als Flockungsmittel statt der Polyaluminiumchloridlösung 60 Gew% einer AlCl₃-Lösung eingesetzt wurde, durchgeführt. Die Abwasserprobe 4 weist denselben EtOH-Gehalt, wie die Abwasserprobe 2 und 5 auf, die ja 50 ppm eines Mittels mit 17 Gew% einer 70%igen Ethanol-Lösung aufweisen.

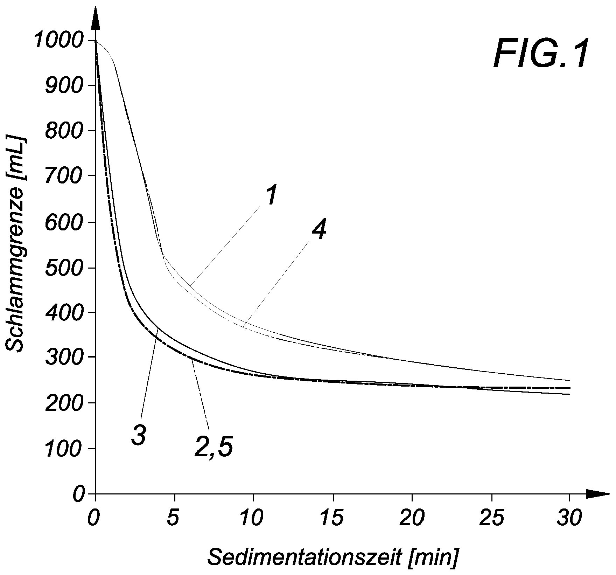

Die Ergebnisse sind in Fig. 1 offenbart, wobei erkenntlich ist, dass die Abwasserprobe 2 mit dem Mittel gemäß dem Ausführungsbeispiel und die Abwasserprobe 5 mit dem Mittel gemäß dem Ausführungsbeispiel, wobei als Flockungsmittel statt der Polyaluminiumchloridlösung 60 Gew% einer AlCl₃-Lösung eingesetzt wurde, trotz erhöhter Viskosität am schnellsten sedimentiert. Da die Sedimentationskurven der Abwasserproben 2 und 5 nahezu ident sind, werden sie aus Übersichtlichkeitsgründen von nur einer Sedimentationskurve repräsentiert.

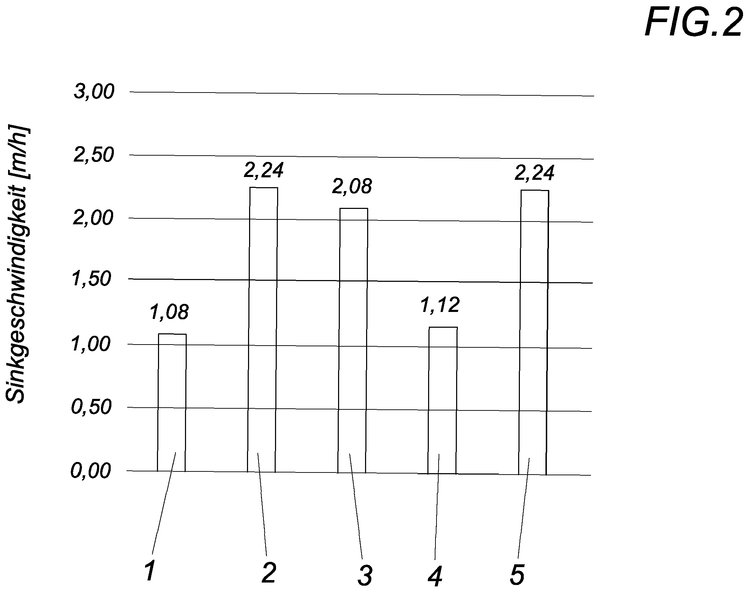

Das verbesserte Sedimentationsverhalten der Abwasserproben 2 und 5 wird auch durch Fig. 2 verdeutlicht, die die aus der Fig. 1 errechneten Sedimentationsgeschwindigkeiten darlegt. Demnach weisen die Abwasserproben 2 und 5 mit 2,24 m/h die höchsten Sedimentationsgeschwindigkeiten auf.

### Quantitative Auswertung der koloniebildenden Einheiten (KBE)

Bei diesem Versuch wurden jeweils 100µL von fünf unterschiedlichen Proben auf ein Universalnährmedium aufgetragen, bei 26°C über 24h bebrütet und danach ausgezählt. Das Ergebnis der unbehandelten Abwasserprobe 1 diente dabei als Referenz zur Berechnung der relativen Keimreduktion. Die Ergebnisse sind in der folgenden Tabelle dargelegt:

| **Probenbezeichnung** | **Keimbelastung [%]** | **Keimreduktion [%]** |
|---|---|---|
| Unbehandelte Abwasserprobe 1 | 100 | 0,00 |
| Abwasserprobe 2 mit 50 ppm des erfindungsgemäßen Mittels gemäß dem Ausführungsbeispiel | 16,98 | 83,02 |
| Abwasserprobe 3 mit 50 ppm des Mittels gemäß dem Ausführungsbeispiel, wobei die Ethanol-Lösung durch Wasser ersetzt wurde | 39,01 | 60,99 |
| Abwasserprobe 4 mit 50 ppm 12%igen EtOH | 119,01 | -19,01 |
| Abwasserprobe 5 mit 50 ppm des Mittels gemäß dem Ausführungsbeispiel, wobei statt der Polyaluminiumchloridlösung 60 Gew% einer AlCl₃-Lösung eingesetzt wurde | 15,74 | 84,26 |

Wie der Tabelle zu entnehmen ist, führte die Abwasserprobe 4, in der nur der EtOH enthalten ist, überraschenderweise zu einer Erhöhung der Keimbelastung bezogen auf die unbehandelte Abwasserprobe 1. Dies ist wohl darauf zurückzuführen, dass der verdünnte Alkohol keine desinfizierende Wirkung mehr aufweist, sondern sogar als Kohlenstoffquelle von den Mikroorganismen genutzt werden kann. Durch Zugabe der restlichen Komponenten (Flockungsmittel, Flockungshilfsmittel, Erdalkali-Lösung) zum EtOH gemäß dem Ausführungsbeispiel (Abwasserprobe 2) kann eine Keimreduktion von 83,02 % erreicht werden. Die Keimreduktion der Abwasserprobe 3 mit 50 ppm des nicht erfindungsgemäßen Mittels gemäß dem Ausführungsbeispiel, wobei die Ethanol-Lösung durch Wasser ersetzt wurde, weist hingegen nur eine Keimreduktion von 60,99 % auf. Durch Kombination des alleine negativ auf die Keimreduktion wirkenden EtOH mit den restlichen Komponenten des erfindungsgemäßen Mittels (Flockungsmittel, Flockungshilfsmittel, Erdalkali-Lösung) kann demnach ein überraschend stark verbesserter keimreduzierender Effekt von mehr als 20% im Gegensatz zur Abwasserprobe 3 erzielt werden. Ein ähnlich starker Effekt wird durch ein erfindungsgemäßes Mittel erzeugt, wobei als Flockungsmittel statt der Polyaluminiumchloridlösung 60 Gew% einer AlCl₃-Lösung eingesetzt wurde (Abwasserprobe 5).

## Patentansprüche

1. Mittel zum Fällen von suspendierten und gelösten Stoffen in aufzubereitenden, kommunalen Abwässern mit einem Gemisch umfassend
a. wenigstens ein Flockungsmittel zur Phosphatfällung, umfassend Fe(II)X und/oder Fe(III)X und/oder AIX und/oder polymere Verbindungen davon, wobei X entweder CI und/oder ein Sulfat und/oder ein Nitrat ist
b. wenigstens ein organisches Polymer als Flockungshilfsmittel, umfassend kationifizierte Stärke und/oder Epichlorhydrindimethylamin-copolymer und/oder Polydiallyldimethylamoniumchlorid und/oder Polyamine und/oder Polyacrylamide und/oder eine Mischung dieser Stoffe
c. und zur Beeinflussung der Ladungsverteilung und Bestimmung der Ladung des Flockungshilfsmittels wenigstens eine Erdalkali-Lösung, aufweisend Ca-Ionen und/oder Mg-Ionen
**dadurch gekennzeichnet, dass** das Gemisch 30 - 80 Gew% einer zwischen 10 und 30 Gew% Al₂O₃ umfassenden polymeren AIX-Lösung oder 30 - 80 Gew% einer AlCl₃-Lösung als Flockungsmittel, 5 - 30 Gew% einer 40 - 60%igen Epichlorhydrindimethylamin-copolymer-Lösung als Flockungshilfsmittel, 1 - 15 Gew% einer 20 - 40%igen MgCl₂-Lösung als Erdalkali-Lösung, sowie 5 - 30 Gew% einer 60 - 80%igen Ethanol-Lösung umfasst.

2. Mittel nach Anspruch 1, **dadurch gekennzeichnet, dass** als polymere AIX-Lösung eine Polyaluminiumchloridlösung vorgesehen ist.

3. Mittel nach Anspruch 1 oder 2, **dadurch gekennzeichnet, dass** es 30 - 80 Gew% einer 18 Gew% Al₂O₃ umfassenden Polyaluminiumchloridlösung als Flockungsmittel, 5 - 30 Gew% einer 50%igen Epichlorhydrindimethylamin-copolymer-Lösung als Flockungshilfsmittel, 1 - 15 Gew% einer 30%igen MgCl₂-Lösung als Erdalkali-Lösung, sowie 5 - 30 Gew% einer 70%igen Ethanol-Lösung umfasst.

## Claims

1. Agent for precipitating suspended and dissolved substances in municipal waste water to be treated with a mixture comprising
a. at least one flocculant for phosphate precipitation comprising Fe(II)X and/or Fe(III)X and/or AIX and/or polymeric compounds thereof, wherein X is either Cl and/or a sulfate and/or a nitrate
b. at least one organic polymer as flocculating aid, comprising cationized starch and/or epichlorohydrin dimethylamine copolymer and/or polydiallyldimethylammonium chloride and/or polyamines and/or polyacrylamides and/or a mixture of these substances
c. and for influencing the charge distribution and determining the charge of the flocculating aid at least one alkaline earth solution comprising Ca ions and/or Mg ions
**characterized in that** the mixture comprises 30 - 80 wt% of a polymeric AIX solution comprising between 10 and 30 wt% Al₂O₃, or 30 - 80 wt% of an AlCl₃ solution as flocculant, 5 - 30 wt% of a 40 - 60% epichlorohydrin dimethylamine copolymer solution as flocculating aid, 1 - 15 wt% of a 20 - 40% MgCl₂ solution as alkaline earth solution, and 5 - 30 wt% of a 60 - 80% ethanol solution.

2. Agent according to claim 1, **characterized in that** a polyaluminium chloride solution is provided as the polymeric AIX solution.

3. Agent according to claim 1 or 2, **characterized in that** it comprises 30-80wt% of a polyaluminium chloride solution comprising 18wt% of Al₂O₃ as flocculant, 5-30wt% of a 50% epichlorohydrin dimethylamine copolymer solution as flocculating aid, 1-15wt% of a 30% MgCl₂- solution as alkaline earth solution, and 5-30wt% of a 70% ethanol solution.

## Revendications

1. Agent pour précipiter des substances en suspension et dissoutes dans des eaux usées communales à retraiter, comprenant un mélange contenant
a. au moins un agent floculant pour la précipitation des phosphates, comprenant du Fe(II)X et/ou du Fe(III)X et/ou de l'AIX et/ou des composés polymères de ceux-ci, X étant du CI et/ou un sulfate et/ou un nitrate
b. au moins un polymère organique comme adjuvant de floculation, comprenant de l'amidon cationique et/ou un copolymère d'épichlorhydrine diméthylamine et/ou du chlorure de polydiallyldiméthylammonium et/ou des polyamines et/ou des polyacrylamides et/ou un mélange de ces substances
c. et pour influencer la répartition de la charge et déterminer la charge de l'adjuvant de floculation, au moins une solution alcalinoterreuse, présentant des ions Ca et/ou des ions Mg,
**caractérisé en ce que** le mélange contient 30 à 80 % en poids d'une solution polymère d'AIX comprenant entre 10 et 30 % en poids d'Al₂O₃ ou 30 à 80 % en poids d'une solution d'AlCl₃ comme agent floculant, 5 à 30 % en poids d'une solution de copolymère d'épichlorhydrine diméthylamine à 40-60 % comme adjuvant de floculation, 1 à 15 % en poids d'une solution de MgCl₂ à 20-40 % comme solution alcalino-terreuse, ainsi que 5 à 30 % en poids d'une solution d'éthanol à 60-80 %.

2. Agent selon la revendication 1, **caractérisé en ce qu'**une solution de polychlorure d'aluminium est proposée comme solution polymère d'AIX.

3. Agent selon la revendication 1 ou 2, **caractérisé en ce qu'**il contient 30 à 80 % en poids d'une solution de polychlorure d'aluminium comprenant 18 % en poids d'Al₂O₃ comme floculant, 5 à 30 % en poids d'une solution à 50 % de copolymère d'épichlorhydrine diméthylamine comme floculant, 1 à 15 % en poids d'une solution à 30 % de MgCl₂ comme solution alcalinoterreuse, ainsi que 5 à 30 % en poids d'une solution à 70 % d'éthanol.
